# EUROPÄISCHE PATENTANMELDUNG

(11) **EP 3 264 006 A1**
(43) Veröffentlichungstag der Anmeldung: **03.01.2018**
(21) Anmeldenummer: 16176865.0
(22) Anmeldetag: 29.06.2016
(51) Int. Cl.: F24H 9/06, F16K 31/60, F24H 9/20

(54) **BAUEINHEIT**

(71) Anmelder: Grundfos Holding A/S, 8850 Bjerringbro (DK)
(72) Erfinder: Hansen, Ole, 8850 Bjerringbro (DK); Søgaard Jensen, Søren, 7800 Skive (DK)
(74) Vertreter: Patentanwälte Vollmann & Hemmer

(57) **Zusammenfassung**

Die Baueinheit (1, 2) bildet Teil eine Gastherme und weist ein mittels einer Spindel (10) ansteuerbares Ventil (9) auf, dessen Spindel (10) Formschlussmittel aufweist. Die Spindel (10) ist über mit einem mit Formschlussmitteln in Eingriff bringbaren Werkzeug von außen steuerbar. Gemäß der Erfindung sind Rastmittel (18, 27) vorgesehen, welche das Werkzeug (21) in Eingriff mit der Spindel (10) halten, so dass das Ventil ohne Zuhilfenahme fremder Werkzeuge steuerbar ist.

## Beschreibung

Die Erfindung betrifft eine Baueinheit für eine Kompaktheizungsanlage mit mindestens einem mittels einer Welle handsteuerbaren Ventil, dessen Welle endseitig Formschlussmittel aufweist, wobei die Welle mittels eines mit den Formschlussmitteln in Eingriff stehenden Werkzeugs von außen steuerbar ist.

Derartige Baueinheiten zählen in mannigfaltigen Variationen heute zum Stand der Technik. Sie dienen zur Versorgung der Raumheizung mit Warmwasser und/oder zusätzlich zur Erzeugung von warmen Brauchwasser. Sie sind typischerweise Teil einer Gastherme, bei welcher Wasser in einem Primärkreis mittels eines Gasbrenners erhitzt wird. Sie können jedoch auch Teil einer ölbetriebenen Heizung, Teil einer Wohnungsstation oder dergleichen sein. In solch einer Baueinheit sind typischerweise neben einer Umwälzpumpe eine Anzahl von Ventilen, Sensoren und Wärmetauschern angeordnet. Regelmäßig weist eine solche Baueinheit ein handbetätigbares Ventil, beispielsweise ein Absperrventil auf, mit welchem das Wärmeträgermedium des Primärkreises ersetzt oder auch ergänzt werden kann. Häufig sind ein oder mehrere Absperrhähne, mit welchen eine Ausgangsleitung drucklos gestellt oder eine Entlüftungsleitung geöffnet werden kann, vorgesehen. Insbesondere bei Baueinheiten für Kompaktheizungsanlagen, wie sie typischerweise wandhängend Anwendung finden und die in Einbaulage praktisch nur von unten zugänglich sind, sind eine oder mehrere dieser Wellen nach unten herausgeführt und weisen endseitig Formschlussmittel, zum Beispiel ein Vierkant- oder Sechskantprofil auf, welches mit einer Zange oder einem anderen geeigneten Maulwerkzeug, zum Zwecke der Betätigung, verbunden werden kann.

Solange es sich hierbei um Wartungs- und Servicearbeiten handelt, die vom Heizungstechniker vorgenommen werden, ist dies unproblematisch, da dieser regelmäßig das erforderliche Werkzeug mitführt. Ein Teil dieser Arbeiten sind aber in unregelmäßigen Abständen auch vom Anwender selbst durchzuführen, soweit es beispielsweise das Nachfüllen von Wasser im Primärheizkreis, das Entlüften des Heizkreises und dergleichen angeht. Damit der Nutzer diese an sich einfachen Tätigkeiten selbst ausführen kann, zählt es zum Stand der Technik, das hierfür erforderliche Werkzeug, beispielsweise einen Maulschlüssel, in einfacher Qualität zusammen mit der Kompaktheizungsanlage auszuliefern.

Es hat sich jedoch in der Praxis gezeigt, dass zum einen für den Laien die Handhabung eines Maulschlüssels an der Unterseite der Heizungsanlage häufig schwierig ist, zum anderen der Schlüssel verlegt wird oder verloren geht und dann die Bedienung nicht mehr möglich ist.

Vor diesem Hintergrund liegt der Erfindung die Aufgabe zugrunde, eine Baueinheit für eine Kompaktheizungsanlage der eingangs genannten Art so auszubilden, dass eine Bedienung auch durch den Laien ohne spezielles Werkzeug gewährleistet ist.

Diese Aufgabe wird durch eine Baueinheit mit den in Anspruch 1 angegebenen Merkmalen gelöst. Vorteilhafte Ausgestaltungen der Baueinheit sind in den Unteransprüchen, der nachfolgenden Beschreibung und der Zeichnung angegeben.

Gemäß der Erfindung sind Rastmittel vorgesehen, welche das Werkzeug in Eingriff mit der Welle halten. Dadurch, dass das Werkzeug rastend auf der Welle gehalten ist, ergibt sich zum einen eine wesentlich einfachere Bedienung, da der Anwender nicht mehr für den Halt des Werkzeugs auf der Welle sorgen muss, sondern nur für die Handbetätigung zur erforderlichen Drehbewegung. Dies erleichtert die Benutzung erheblich. Des Weiteren dient die Verrastung mit der Welle dazu, dass ohne ein bewusstes Zutun das Werkzeug stets auf der Welle verbleibt, das heißt gegen Verlegen oder Verlieren erst einmal gesichert ist.

Dabei spielt es für die erfindungsgemäße Lösung grundsätzlich keine Rolle, ob die Rastmittel wellenseitig oder werkzeugseitig oder beidseitig angeordnet sind. Als besonders vorteilhaft hat es sich allerdings erwiesen, wenn diese werkzeugseitig angeordnet sind.

Besonders vorteilhaft ist es, wenn das Werkzeug selbst Teil der Baueinheit bildet, das heißt zur Baueinheit gehörig ist und in geeigneter Weise, nach Möglichkeit unverlierbar, mit dieser verbunden ist. Besonders vorteilhaft bildet die erfindungsgemäße Baueinheit Teil einer Kompaktheizungsanlage oder einer Wohnungsstation, wobei das Wellenende und/oder das Werkzeug in Einbaulage zu einer Seite herausragt. Wenn, was typisch ist, die Kompaktheizungsanlage oder die Wohnungsstation wandhängend montiert ist, dann ist es besonders zweckmäßig, das Wellenende und/oder das Werkzeug in Einbaulage nach unten herausragen zu lassen.

Besonders vorteilhaft ist es, wenn das Wellenende mit einem Außensechskantprofil versehen ist und das Werkzeug ein Innensechskantprofil aufweist. Es versteht sich, dass geeignete andere Werkzeugprofile, zum Beispiel Torx, Phillips oder dergleichen hier ebenfalls eingesetzt werden können. Die Kombination der Sechskantprofile ist jedoch besonders vorteilhaft, da diese auch vom Laien einfach zu fügen sind und auch bei geeigneter Ausbildung mit Winkelversatz zueinander betätigbar sind. Auch ist die Anformung eines Außensechskantprofils am Wellenende einer Welle aus Metall fertigungstechnisch besonders günstig.

Vorteilhaft ist dabei das Außensechskantprofil am Wellenende kopfförmig ausgebildet, wobei das Werkzeug den Kopf hintergreifende Rastmittel aufweist. Eine solche kopfförmige Ausbildung des Außensechskantprofils zählt bei Werkzeugen zum Stand der Technik und hat nicht nur den Vorteil, dass hintergreifende Rastmittel angebracht werden können, sondern erlaubt eine Betätigung, auch wenn die Längsachsen von Welle und Werkzeug nicht miteinander fluchten, sondern sich schneiden.

Die Rastmittel können vorteilhaft durch eine oder mehrere Rastzungen gebildet sein, die vorzugsweise am Werkzeug, insbesondere am Werkzeugkopf, vorgesehen sind.

Dabei ist das Werkzeug gemäß einer Weiterbildung der Erfindung mit einem rohrförmigen Werkzeugkopf ausgestattet, dessen Querschnittskontur mit der Querschnittskontur des Wellenendes korrespondiert und der die Rastmittel aufweist. Ein solcher Werkzeugkopf hat den Vorteil, dass er besonders einfach anwendbar ist. Nach Aufstecken auf das Wellenende verbleibt dieser durch die Rastmittel auf dem Wellenende.

Gemäß einer vorteilhaften Weiterbildung der Erfindung ist die Welle nahe ihrem freien Ende mit einem weiteren Formschlussprofil versehen, und zwar bevorzugt an ihrem Außenumfang. Dieses Formschlussprofil am Außenumfang ist vorteilhaft als Vierkantprofil ausgebildet und in Richtung zum freien Wellenende gesehen vor dem Formschlussprofil für das zur Baueinheit gehörende Werkzeug angeordnet, also beispielsweise vor dem Sechskantprofilkopf am Wellenende. Alternativ kann hier auch ein Sechskantprofil vorgesehen sein. Eine solche Anordnung hat den Vorteil, dass die Welle damit auch ein Profil aufweist, wie es zum Stand der Technik zählt und das mit einem üblichen Maulwerkzeug betätigt werden kann. Dieses Profil ist typischerweise für die Anwendung vom Serviceinstallateur vorgesehen. Vorteilhaft weist dieses Profil einen größeren Querschnitt auf als das nachfolgende Profil am Wellenende, welches mit dem Werkzeug der Baueinheit in Eingriff steht. Hierdurch wird erreicht, dass durch Anbringen eines Maulwerkzeugs an diesem Profil ein größeres Moment aufgebracht werden kann, als dies mit dem der Baueinheit eigenen Werkzeug möglich ist. Dies ist ein Sicherheitsaspekt, wodurch gewährleistet ist, dass der Endanwender die Welle nicht "überdrehen" kann, sondern nur der Fachmann, der jedoch weiß, welche Kraft mit einem geeigneten Werkzeug aufgebracht werden muss und darf, ohne dass es zu Beschädigungen an der Welle oder am Ventil kommt. Dieser Aspekt ist insbesondere wichtig, wenn sich die Welle aufgrund mangelnder Betätigung festgesetzt hat.

Das zur Baueinheit gehörige Werkzeug ist vorteilhaft so ausgestaltet, dass es einen Werkzeugkopf aufweist, der zum rastenden Übergriff des profilierten Wellenendes vorgesehen ist, sowie einen Werkzeuggriff, der zum Umgreifen mit der Hand vorgesehen ist. Verbunden sind diese beiden Werkzeugteile durch einen Werkzeugschaft, welcher die erforderliche Distanz herstellt, damit ausreichend Freiraum für die manuelle Betätigung gegeben ist, ohne dass die Gefahr der Verletzung an einem beispielsweise scharfkantigen Verkleidungsteil oder dergleichen besteht. Werkzeugkopf und Werkzeuggriff sind an voneinander abweisenden Enden des Schaftes angeordnet und schließen somit eine Fehlbedienung weitgehend aus.

Ein solches Werkzeug kann vorteilhaft als einstückiges Kunststoffbauteil ausgebildet sein, welches vorzugsweise faserverstärkt ist, damit auch die erforderlichen Kräfte sicher übertragen werden können.

Wenn das Werkzeug als Kunststoffspritzgussteil ausgebildet ist, was vorteilhaft ist, dann ist dieses zum einen kostengünstig herstellbar, zum anderen können sowohl die Federzunge oder Federzungen als auch der Werkzeugkopf so ausgebildet sein, dass sie mit einem einfachen Werkzeug ohne verlorene Kerne herstellbar sind, anders als dies umgekehrt beim Wellenende der Fall wäre.

Die Welle hingegen besteht zweckmäßigerweise aus Metall, kann jedoch auch aus geeignetem anderem Material gebildet sein. Die Welle bildet vorteilhaft die Ventilspindel eines Absperrventils oder Teil eines Absperrhahns, also den Teil, an welchem das Kücken bzw. das Schließelement am ventilseitigen Ende angeordnet ist.

Vorteilhaft ist auch die Baueinheit selbst als Kunststoffspritzgussteil ausgebildet oder aus Kunststoffspritzgussteilen gebildet und zur Aufnahme von Komponenten und/oder zum Anschluss mindestens einer Leitung vorgesehen. Komponenten im Sinne der vorliegenden Erfindung können Sensoren, Ventile, Pumpen, Schalteinrichtungen und dergleichen sein.

Auch wenn das erfindungsgemäße Werkzeug rastend mit dem Wellenende verbunden ist und insoweit nicht die Gefahr besteht, dass das Werkzeug verloren geht, so ist doch nicht ausgeschlossen, dass es bewusst abgezogen wird. Auch sind Ausführungen denkbar, bei denen zwei oder mehr Wellenenden vorgesehen sind, auf denen das Werkzeug platzierbar ist, wobei dann nicht für jedes Wellenende zwingend ein eigenes Werkzeug vorzusehen ist. Für diese Fälle ist es besonders zweckmäßig, wenn zwischen Baueinheit und Werkzeug ein flexibles Halteelement vorgesehen ist, um das Werkzeug unverlierbar an der Baueinheit festzulegen. Ein solches Halteelement kann beispielsweise eine Sicherungsschnur, ein Draht, eine Kugelkette oder dergleichen sein. Eine solche Schnur kann werkzeugseitig zum Beispiel an einem Durchbruch im Werkzeuggriff einerseits und einer Öse oder einem entsprechenden Durchbruch an der Baueinheit selbst befestigt sein.

Die Erfindung ist nachfolgend anhand eines in den Figuren dargestellten Ausführungsbeispiels näher erläutert. Es zeigen:
- Fig. 1: eine Baueinheit für eine Kompaktheizungsanlage in Einbaulage und Ansicht von vorne,
- Fig. 2: die Baueinheit gemäß Fig. 1 ohne Werkzeug,
- Fig. 3: die Baueinheit gemäß Fig. 1 mit beispielhaft vier Welle-/Werkzeuganordnungen,
- Fig. 4: in vereinfachter perspektivischer Darstellung das Werkzeug,
- Fig. 5: in vereinfachter perspektivischer Darstellung das Werkzeug von der Werkzeugkopfseite her,
- Fig. 6: in vereinfachter perspektivischer Darstellung den Spindeltrieb eines Absperrventils,
- Fig. 7: einen Absperrhahn mit Werkzeug in Seitenansicht,
- Fig. 8: den Absperrhahn gemäß Fig. 7 in Ansicht von vorne,
- Fig. 9: einen Schnitt längs der Schnittlinie A-A in Fig. 8 und
- Fig. 10: eine Ansicht des Absperrhahns von der in Fig. 8 linken Seite.

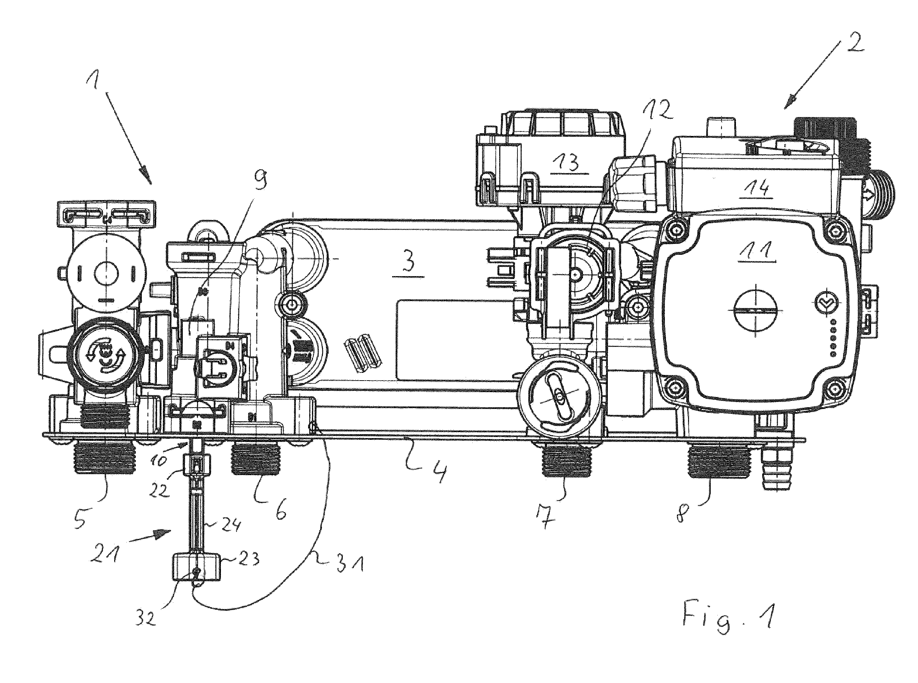

Bei der in den Fig. 1 -3 dargestellten Baueinheit handelt es sich um eine Baueinheit einer Kompaktheizungsanlage, nämlich einer Gastherme, wie sie in ihren grundsätzlichen Aufbau beispielsweise in EP 2 093 516 B1 beschrieben ist, auf die insoweit auch hier verwiesen wird. Sie besteht aus zwei Teilbaueinheiten 1 und 2, welche durch einen Plattenwärmetauscher 3 hydraulisch und mechanisch miteinander verbunden sind. Die Baueinheit ist von einer in Einbaulage etwa horizontal verlaufenden Platte 4 aufgenommen, die Teil des Chassis der Kompaktheizungsanlage bildet, welche rückseitig wandbefestigt ist und an der die vier Leitungsanschlüsse 5, 6, 7, 8 der Teilbaueinheiten 1 und 2 an der Unterseite herausgeführt sind. Diese Leitungsanschlüsse 5 - 8 sind für den Vor- und Rücklauf der Raumheizung, für den Zulauf von kaltem Brauchwasser sowie den Ausgang von im Wärmetauscher 3 erwärmten Brauchwasser vorgesehen.

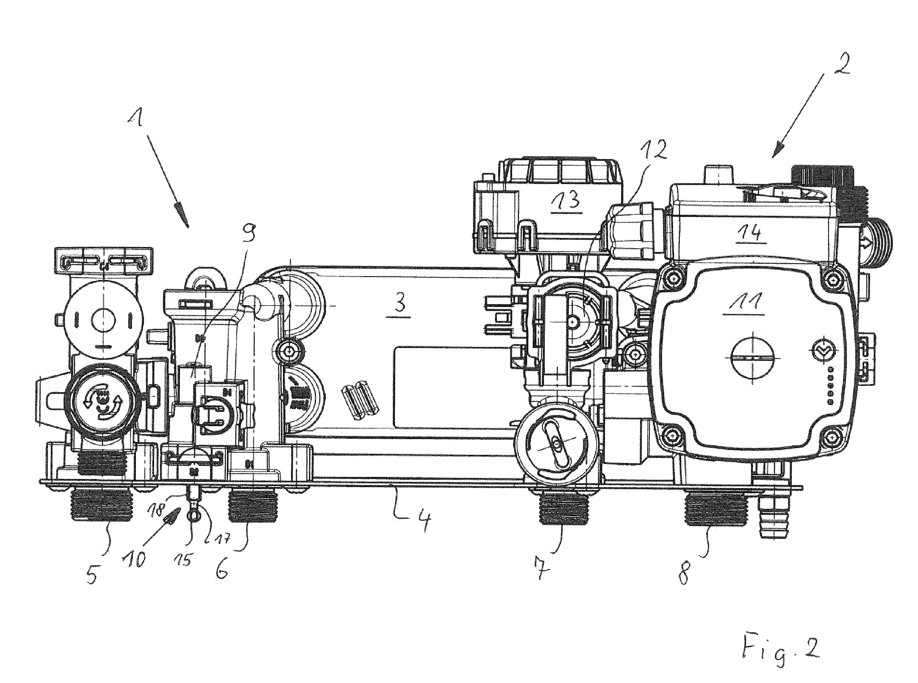

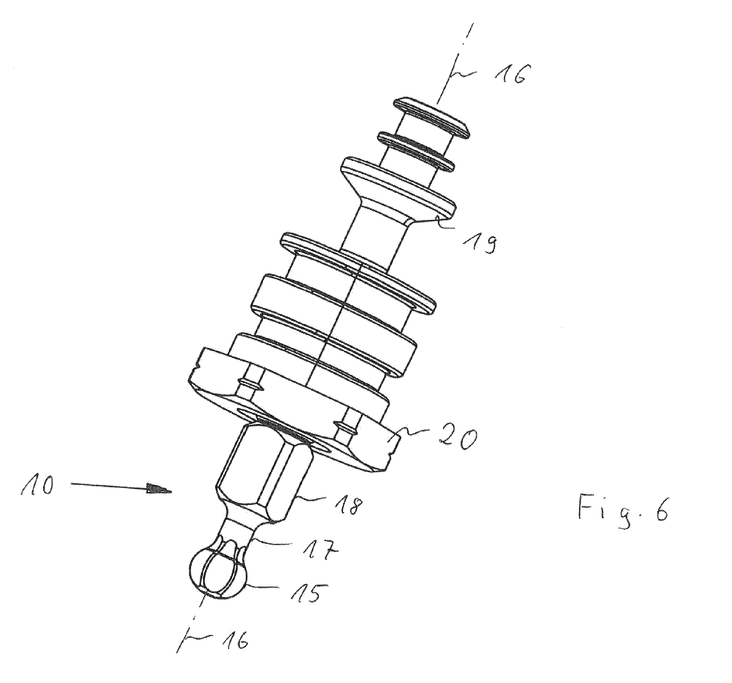

Die linke Teilbaueinheit 1, welche rückseitig an dem Plattenwärmetauscher 3 anschließt, weist ein Füllventil 9 auf, mit welchem eine brauchwasserführende Leitung der Baueinheit mit dem Heizkreis verbindbar ist, welcher mit der Raumheizung verbunden ist. Dieses Füllventil 9 weist eine Welle 10 zum manuellen Öffnen und Schließen auf, welche eine Ventilspindel 10 bildet und Teil des anhand von Fig. 6 dargestellten Spindeltriebs bildet. Das freie Ende dieser Welle 10 ragt an der Unterseite der Baueinheit 1 die Platte 4 durchsetzend heraus, wie dies am besten anhand von Fig. 2 sichtbar ist.

Die in Einbaulage rechte Teilbaueinheit 2 umfasst eine Umwälzpumpe 11, mit einem elektromotorisch gesteuerten Umschaltventil 12, dessen Elektromotor 13 in den Figuren sichtbar ist. Die Umwälzpumpe 11 weist seitlich oben am Motorgehäuse einen Klemmenkasten 14 auf, welcher die Steuerelektronik für die Pumpe aufnimmt und über welche die elektrischen Anschlüsse nach außen geführt sind. Die Anordnung der Teilbaueinheiten 1 und 2 sowie deren Komponenten ist hier nur beispielhaft zu verstehen, für die vorliegende Erfindung wesentlich ist die nach unten aus der Baueinheit die Platte 4 durchdringend herausgeführte Welle 10.

Diese Welle 10 weist an ihrem Ende einen Wellenkopf 15 auf, der kugelartig ausgebildet ist und mit einem Außensechskantprofil versehen ist, wie dies anhand von Fig. 6 erkennbar ist. Der Wellenkopf 15 weist, bezogen auf seine Mittellängsachse 16, ein Außensechskantprofil auf, welches der Kopfkontur folgt und derart hinterschnitten ausgebildet ist, dass sich ein Wellenabschnitt 17 ergibt, dessen Durchmesser kleiner als der kleinste Durchmesser des Wellenkopfes 15 ist. An diesem halsförmigen Wellenabschnitt 17 schließt sich ein Abschnitt 18 an, welcher mit einem Außenvierkantprofil versehen ist, welches zum Eingriff eines Maulwerkzeuges, beispielsweise eines Maulschlüssels, eines Rollgabelschlüssels oder einer Zange vorgesehen ist. Der kleinste Durchmesser im Bereich dieses Abschnitts 18 ist größer als der größte Durchmesser im Bereich des Wellenkopfes 15, das heißt die abgewandt gegenüberliegenden Flächen des Außenvierkantprofils im Bereich des Abschnitts 18 sind weiter voneinander beabstandet als die abgewandt gegenüberliegende Flächen des Außensechskantprofils im Bereich des Wellenkopfes 15.

In ihrem weiteren Verlauf geht die Welle dann in den in Fig. 6 nicht sichtbaren Wellenabschnitt über, der Teil des eigentlichen Spindeltriebs bildet, mit welchem ein Dichtkörper 19 gegenüber einem Dichtsitz in der Baueinheit 1 und einem feststehenden Befestigungsteil 20 axial beweglich ist, wenn die Welle 10 in die eine oder andere Richtung gedreht wird. Der feststehende Befestigungsteil 20 ist an einer entsprechenden Ausnehmung der Baueinheit 1 drehfest angeordnet und festgelegt.

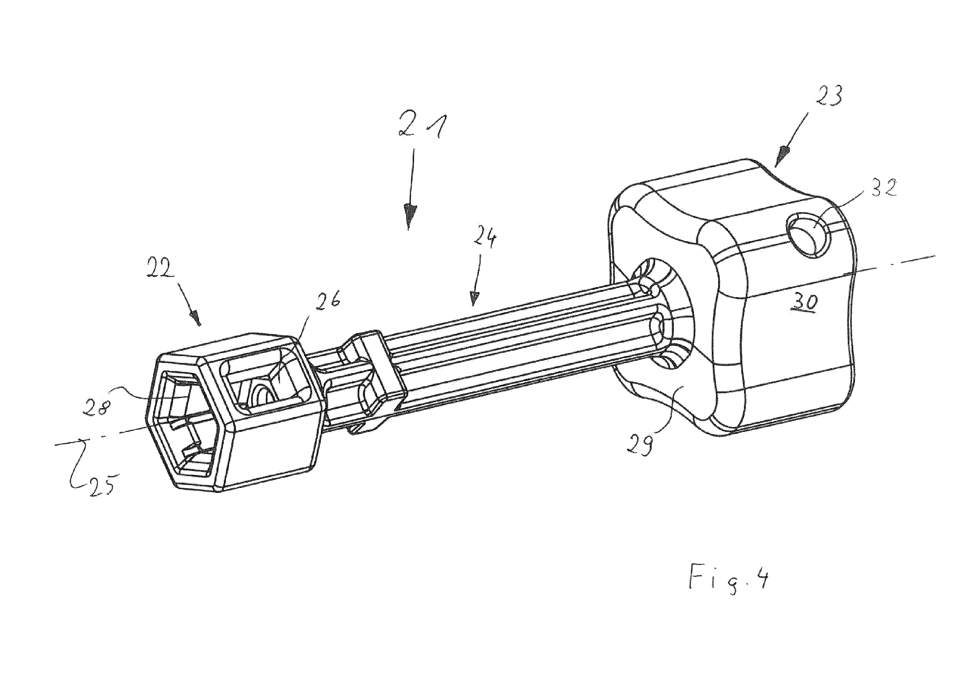

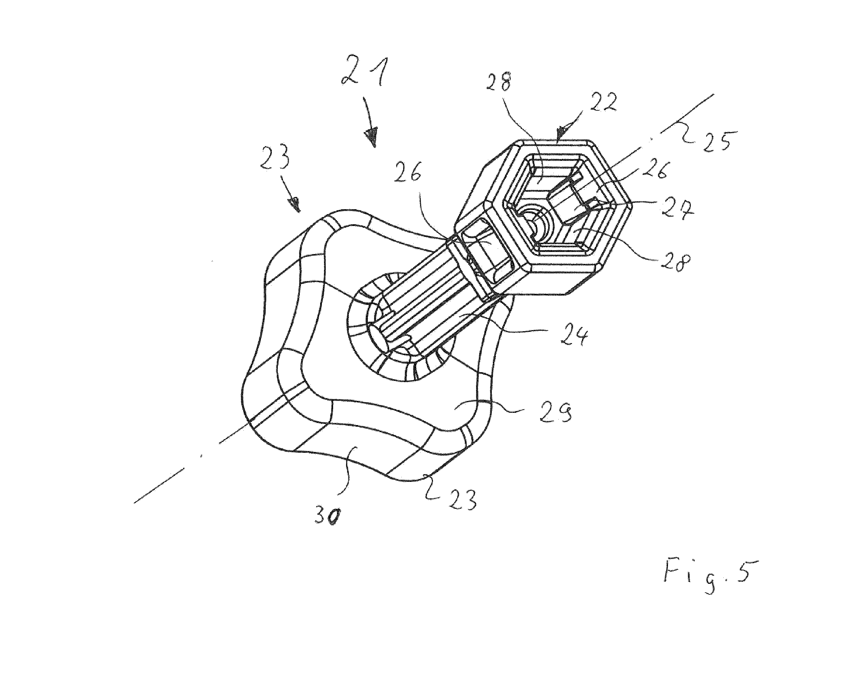

Während der Wellenabschnitt 18 mit seinem Außenvierkant zum Eingriff mit einem Maulschlüssel oder anderem geeigneten Werkzeug vorgesehen ist, sitzt auf dem Wellenkopf 15 ein Werkzeug 21, das in Fig. 4 und 5 dargestellt ist. Dieses Werkzeug 21 ist als faserverstärktes Kunststoffspritzgussteil ausgebildet und weist einen Werkzeugkopf 22, einen Werkzeuggriff 23 und einen diese verbindenden Schaft 24 auf.

Der Werkzeugkopf 22 weist in Richtung der Längsachse 25 des Werkzeugs 21 eine sechseckige Außen- und Innenkontur auf. Die axiale Länge des Werkzeugkopfes 22 entspricht etwa der axialen Länge des Wellenkopfes 15, zu dessen Aufnahme er bestimmt ist. An zwei gegenüberliegenden Seiten des Werkzeugkopfes 22 weist dieser Ausnehmungen 26 auf, an deren Innenseite Federzungen 27 angeordnet sind, die nach innen über die Sechskantkontur vorstehen und federnd in die jeweilige Ausnehmung 26 ausweichen können. Diese Federzungen 26 werden beim Aufstecken des Werkzeuges 21, insbesondere des Werkzeugkopfes 22, auf den Wellenkopf 15 radial nach außen bewegt, bis sie hinter dem Kopf, also im Bereich des halsförmigen Wellenabschnitts 17 radial nach innen zurückfedern und so den Werkzeugkopf 22 und damit das gesamte Werkzeug 21 rastend auf der Welle 10 festlegen. Dabei liegen vier Innenflächen 28 an den entsprechenden Seiten des Außensechskantprofils des Wellenkopfes 15 an, so dass über den Wellenkopf ein Drehmoment auf die Welle 10 übertragen werden kann. Die Federzungen 27 halten das Werkzeug 21 dabei auf dem Wellenkopf 15 der Welle 10 fest.

Der Wellenkopf 22 ist einstückig mit dem daran anschließenden im Querschnitt etwa kreuzförmigen Wellenschaft 24 verbunden, an dessen anderen Ende der Werkzeuggriff 23 angeordnet ist, welcher hier in etwa eine quadratische abgerundete Querschnittsform aufweist, welche über einen quer zur Längsachse 25 angeordneten Boden 29 mit den Schaft 24 verbunden ist. Der Werkzeuggriff 23 ist in gleicher Weise wie der Kopf 22 hohl ausgebildet, so dass er vom Ende des Schaftes 24 ausgehend sich zunächst in den quer zur Längsachse 25 erstreckenden Boden 29 und von dort um 90° abgebogen in den ringförmigen Griffbereich 30 erstreckt, der in Form und Abmessung so ausgebildet ist, dass er als Griff in der Handfläche liegt.

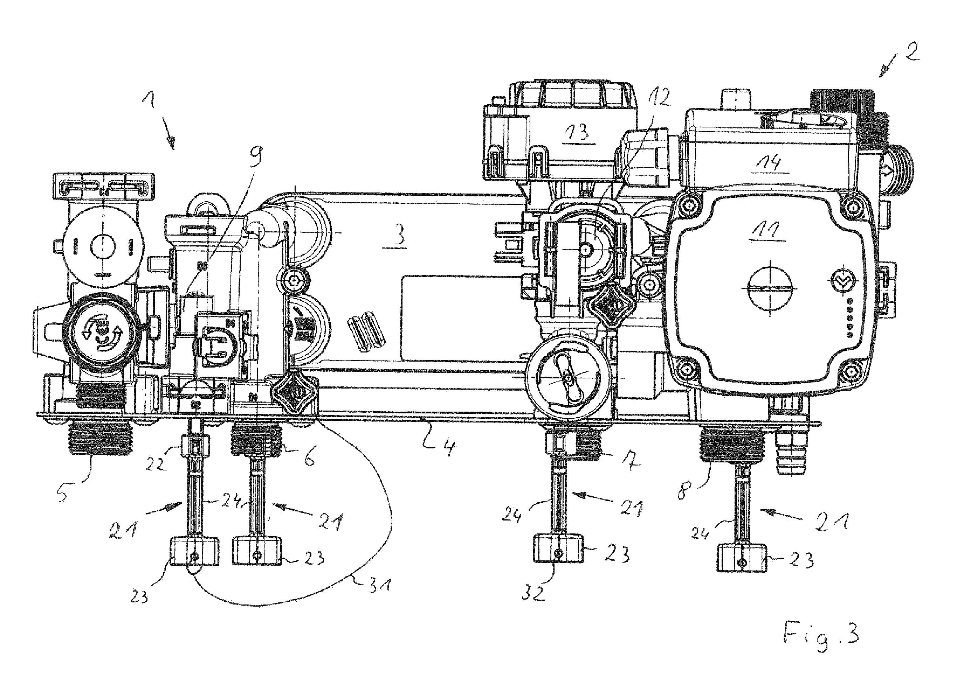

Der Werkzeuggriff 23 weist im Bereich der den Griffbereich 30 bildenden Wandung eine Ausnehmung 32 auf, an der ein in Fig. 1 und 3 dargestelltes Sicherungsband 31 angebracht ist, dessen anderes Ende an der Baueinheit 1 befestigt ist. Dieses Sicherungsband 31 sorgt dafür, dass selbst dann, wenn das Werkzeug 21 - aus welchen Gründen auch immer - vom Wellenkopf 15 abgezogen worden ist, nicht verloren gehen kann, sondern an dem Sicherungsband 31 mit Abstand unter der Baueinheit 1 hängend verbleibt.

Dieses vergleichsweise leichte Kunststoffwerkzeug 15 sitzt üblicherweise mittels der Federzungen 27 verrastet auf dem Wellenkopf 15, so dass zum Drehen der Ventilspindel lediglich der Bediener am Griffteil 23 anfassen und dieses in die eine oder andere Drehrichtung drehen muss. Abgezogen vom Wellenkopf 15 wird das Werkzeug 21 nur, wenn es für andere Arbeiten im Wege ist. Dann hängt es an dem Sicherungsband 31 unter der Teilbaueinheit 1, bleibt also gut sichtbar, mit der Hand zugänglich und mit ausreichendem Abstand von der Unterseite der Platte 4 entfernt, so dass es jederzeit mit einem Handgriff wieder auf dem Wellenkopf 15 aufsetzbar ist.

Anhand von Fig. 3 ist beispielhaft dargestellt, dass an einer Baueinheit mehrere solcher Werkzeuge 21 auf Wellen befindlich sein können, die bestimmte Ventil- oder auch andere Funktionen steuern. Dabei muss nicht notwendigerweise auf jeder der nach unten aus der Baueinheit herausragenden Wellen 10 ein Werkzeug 21 sitzen, es ist auch denkbar, dass ein gemeinsames Werkzeug 21 vorgesehen ist, welches je nach Bedarf auf dem einen oder anderen Wellenkopf aufgesteckt wird. Da der Wellenkopf 15 kugelartig ausgebildet ist, kann das Werkzeug 21 auch in den in Fig. 3 rechten Positionen angeordnet sein, wo die Welle in Montagerichtung hinter einem der Anschlüsse 6, 7 oder 8 die Platte 4 durchsetzend aus der Baueinheit heraus nach unten heraustritt. Um den dann typischerweise hinter einer Rohrleitung liegenden Werkzeuggriff 23 zu erreichen, kann das gesamte Werkzeug 21 seitlich geschwenkt werden, da der Wellenkopf 15 eine kugelartige Form hat und im Bereich des halsförmigen Abschnitts 17 ausreichend weit hinterschnitten ist.

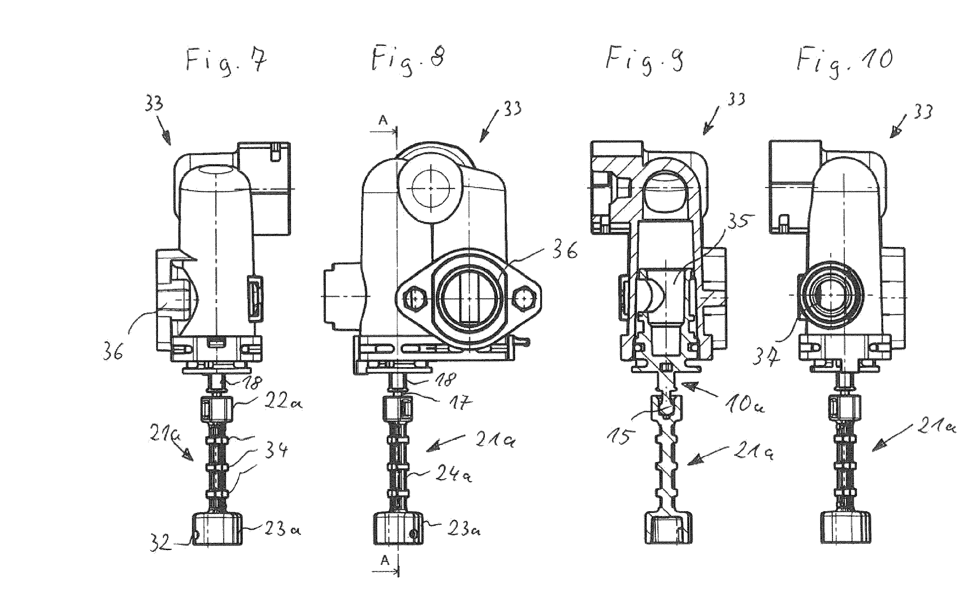

Anhand der Fig. 7 - 10 ist beispielhaft ein Ventil einer Baueinheit dargestellt. Dieses Ventil 33, welches mittels einer Welle 10a manuell steuerbar ist, weist in gleicher Weise wie das vorbeschriebene Füllventil 9 an der Welle 10a einen Wellenkopf 15, einen sich daran anschließenden Wellenhals 17 sowie einen Abschnitt 18 mit Vierkantaußenprofil auf. Das Werkzeug 21 a ist in analoger Weise aufgebaut wie das Werkzeug 21, weist jedoch ein im Querschnitt kreisrunden Werkzeuggriff 23a auf sowie einen Schaft 24a mit drei Verstärkungsringen 34. Das Ventil 33 ist jedoch nicht als Spindelventil, sondern als Absperrhahn ausgebildet, der ein drehbar innerhalb des Ventilgehäuses angeordnetes Kücken 35 aufweist, mit dem je nach Drehstellung der Welle 10a die Anschlüsse 36 und 37 des Ventils miteinander hydraulisch verbunden bzw. voneinander getrennt werden.

### Bezugszeichenliste

- 1: Teilbaueinheit
- 2: Teilbaueinheit
- 3: Plattenwärmetauscher
- 4: Platte
- 5, 6, 7, 8: Leitungsanschlüsse
- 9: Füllventil
- 10: Welle
- 10a: Welle in den Fig. 7 - 10
- 11: Umwälzpumpe
- 12: Umschaltventil
- 13: Elektromotor
- 14: Klemmenkasten
- 15: Wellenkopf
- 16: Mittellängsachse der Welle
- 17: halsförmiger Wellenabschnitt
- 18: Abschnitt mit Vierkantprofil
- 19: Dichtkörper
- 20: feststehender Befestigungsteil
- 21: Werkzeug
- 21a: Werkzeug in den Fig. 7 - 10
- 22: Werkzeugkopf
- 23: Werkzeuggriff
- 23a: Werkzeuggriff in den Fig. 7 - 10
- 24: Werkzeugschaft
- 24a: Werkzeugschaft in den Fig. 7 - 10
- 25: Längsachse des Werkzeugs
- 26: Ausnehmungen im Werkzeugkopf
- 27: Federzungen im Werkzeugkopf
- 28: Innenflächen im Werkzeugkopf
- 29: Boden des Werkzeuggriffes
- 30: Griffbereich des Werkzeuggriffes
- 31: Sicherungsband
- 32: Ausnehmung im Griffbereich
- 33: Ventil in den Fig. 7 - 10
- 34: Verstärkungsringe am Schaft 24a
- 35: Kücken
- 36,37: Anschlüsse

## Patentansprüche

1. Baueinheit für eine Kompaktheizungsanalage mit mindestens einem mittels einer Welle (10) handsteuerbaren Ventil (9), dessen Welle (10) endseitig Formschlussmittel aufweist, wobei die Welle (10) mittels eines mit den Formschlussmitteln im Eingriff stehenden Werkzeugs von außen steuerbar ist, **dadurch gekennzeichnet, dass** Rastmittel (27, 18) vorgesehen sind, welche das Werkzeug (21) im Eingriff mit der Welle (10) halten.

2. Baueinheit nach Anspruch 1, **dadurch gekennzeichnet, dass** das Werkzeug (21) Teil der Baueinheit (1, 2) bildet.

3. Baueinheit nach Anspruch 1 oder 2, **dadurch gekennzeichnet, dass** die Baueinheit (1, 2) Teil einer Kompaktheizungsanlage oder einer Wohnungsstation bildet und dass das Wellenende (15) und/ oder das Werkzeug (21) in Einbaulage zu einer Seite, vorzugsweise nach unten heraus ragt.

4. Baueinheit nach einem der vorhergehenden Ansprüche, **dadurch gekennzeichnet, dass** das Wellenende (15) mit einem Außensechskantprofil versehen ist und dass das Werkzeug (21) ein Innensechskantprofil aufweist.

5. Baueinheit nach Anspruch 4, **dadurch gekennzeichnet, dass** das Außensechskantprofil kopfförmig ausgebildet ist und dass das Werkzeug (21) den Kopf (15) hintergreifende Rastmittel (27) aufweist.

6. Baueinheit nach Anspruch 5, **dadurch gekennzeichnet, dass** die Rastmittel durch mindestens eine Federzunge (27) gebildet sind, die Teil des Werkzeugs (21), insbesondere eines Werkzeugkopfes (22), bildet.

7. Baueinheit nach Anspruch 5 oder 6, **dadurch gekennzeichnet, dass** das Werkzeug (21) einen rohrförmigen Werkzeugkopf (22) aufweist, dessen Querschnittsinnenkontur mit der Querschnittsaußenkontur des Wellenendes (15) korrespondiert und der die Rastmittel (27) aufweist.

8. Baueinheit nach einem der vorhergehenden Ansprüche, **dadurch gekennzeichnet, dass** die Welle (10) nahe ihrem freien Ende mit einem weiteren Formschlussprofil versehen ist, vorzugsweise mit einem Vierkantprofil, welches zum Eingriff mit einem externen Werkzeug vorgesehen ist.

9. Baueinheit nach Anspruch 8, **dadurch gekennzeichnet, dass** das weitere Formschlussprofil, insbesondere das Vierkantprofil, in Richtung zum freien Wellenende (15) gesehen vor dem Formschlussprofil für das zur Baueinheit gehörende Werkzeug (21) angeordnet ist.

10. Baueinheit nach einem der vorhergehenden Ansprüche, **dadurch gekennzeichnet, dass** das Werkzeug (21) einen Werkzeugkopf (22), einen Werkzeugschaft (24) und einen Werkzeuggriff (23) aufweist, wobei Werkzeugkopf (22) und Werkzeuggriff (23) an den Enden des Werkzeugschaftes (24) angeordnet sind.

11. Baueinheit nach einem der vorhergehenden Ansprüche, **dadurch gekennzeichnet, dass** das Werkzeug (21) als einstückiges, vorzugsweise faserverstärktes Kunststoffbauteil ausgebildet ist.

12. Baueinheit nach einem der vorhergehenden Ansprüche, **dadurch gekennzeichnet, dass** das Werkzeug (21) als Kunststoffspritzgussteil ausgebildet ist.

13. Baueinheit nach einem der vorhergehenden Ansprüche, **dadurch gekennzeichnet, dass** die Welle (10) aus Metall besteht und eine Ventilspindel eines Absperrventils (9) oder Teil eines Absperrhahns (33) bildet.

14. Baueinheit nach einem der vorhergehenden Ansprüche, **dadurch gekennzeichnet, dass** sie als Kunststoffspritzgussteil ausgebildet und zur Aufnahme von Komponenten und/oder zum Anschluss von mindestens einer Leitung vorgesehen ist.

15. Baueinheit nach einem der vorhergehenden Ansprüche, **dadurch gekennzeichnet, dass** die Baueinheit (1, 2) über ein flexibles Halteelement (31) unverlierbar mit dem Werkzeug (21) verbunden ist.

16. Werkzeug mit Merkmalen aus einem oder mehreren der vorhergehenden Ansprüche zur manuellen Betätigung eines Ventils (9, 33) einer Baueinheit (1, 2) einer Kompaktheizungsanlage.
